# EUROPÄISCHE PATENTANMELDUNG

(11) **EP 3 511 304 A1**
(43) Veröffentlichungstag der Anmeldung: **17.07.2019**
(21) Anmeldenummer: 19150535.3
(22) Anmeldetag: 07.01.2019
(51) Int. Cl.: C04B 26/18, C04B 40/00, C04B 111/54

(54) **SPEZIELLE ZUSAMMENSETZUNG ORGANOFUNKTIONELLER ALKOXYSILANE UND DEREN VERWENDUNG**

(30) Priorität: 11.01.2018 DE 102018200421; 19.04.2018 DE 102018206005
(71) Anmelder: Evonik Degussa GmbH, 45128 Essen (DE)
(72) Erfinder: Standke, Burkhard, 79540 Lörrach (DE); Waßmer, Christian, 79688 Hausen (DE); Edinger, Andrea, 79664 Wehr (DE); Onofrei, Jenny, 79804 Dogern (DE)

(57) **Zusammenfassung**

Die vorliegende Erfindung betrifft eine Zusammensetzung umfassend Vinyltrimethoxysilan und 3-Methacryloxypropyltrimethoxysilan in einem definierten Verhältnis und deren Verwendung bei der Herstellung von Kunststein.

## Beschreibung

Gegenstand der vorliegenden Erfindung betrifft eine spezielle Zusammensetzung umfassend Vinyltrimethoxysilan und 3-Methacryloxypropyltrimethoxysilan in einem definierten Verhältnis und deren Verwendung bei der Herstellung von Kunststein.

Im Markt erhält man heute eine Reihe unterschiedlicher Kunststeinarten, die sich aufgrund ihrer Einsatzstoffkomponenten und somit in Ihren Eigenschaften bzw. Applikationsmöglichkeiten unterscheiden.

Zum Beispiel betrifft EP 0 483 280 B1 einen künstlichen Marmor auf Basis eines ethylenisch ungesättigten Polyesterharzes und Aluminiumhydroxid sowie weiteren Zusätzen bzw. Verarbeitungshilfsstoffe, wobei das Aluminiumhydroxid mit 3-Methacryloxypropyltrimethoxysilan oder Vinyltrimethoxysilan als Kupplungsmittel behandelt ist.

EP 2 162 408 B1 sowie US 8,039,539 offenbaren thermisch härtbare Harzzusammen-setzungen, die u.a. ein definiertes anorganisches Pulver oder anorganische Fasern enthalten, welche mit einem Kupplungsmittel behandelt sind, das neben einem Vinyl- oder Methacryloxypropylfunktionellen monomeren Alkoxysilan ein organofunktionelles Siloxan mit hydrolysierebaren Gruppen enthält.

Unter Kunststein sind nachfolgend solche Produkte zu verstehen, die in der Regel als "Engineered Stones" bezeichnet bzw. vorwiegend nach dem "Breton Process" hergestellt werden und im Wesentlichen auf mindestens einem ethylenisch ungesättigten Polyesterharz (nachfolgend auch kurz als UPE-Harz bezeichnet) und mindestens einem anorganischen Füllstoff, beispielsweise Mineral- und/oder Glasfasern, Aluminiumoxid, Aluminiumhydroxid, SiO₂-basierten Fest- bzw. Füllstoffe, wie Sand, Silikate oder Gestein, sowie Pigmente oder andere Verarbeitungszusätze beruhen.

Gemäß "Breton Process" werden die Komponenten Füllstoff, wie Quarz, Harz und Silan sowie weitere Zusatz-/Hilfsstoffe, wie Styrol, Peroxide, Pigmente etc., in einem Mischer homogenisiert und verflüssigt, in eine Vakuumpresse überführt und verdichtet, so erhaltene Formstücke nachfolgend in einem Trockenofen gehärtet, anschließend auf einem Transportband unter schonenden Bedingungen, d.h. unter kontrollierter Belüftung und Temperaturkontrolle auf Raumtemperatur abgekühlt und für den Verkauf nachbehandelt, beispielsweise Nachtrocknen bzw. Auslüften, Zuschneiden, Polieren, Qualitätskontrolle, Verpacken. Eine Vorrichtung zur Herstellung von Kunststein ist beispielsweise US 4,698,010 zu entnehmen.

Hinsichtlich der Anwendungsmöglichkeiten von Kunststein ist man in der Praxis stets um die Verbesserung der Eigenschaften von Kunststein bemüht. Darüber hinaus spielt heutzutage auch die Kostenfrage, wie Kosten für Einsatzstoffe sowie Herstellkosten, eine wesentliche Rolle.

Der vorliegenden Erfindung lag somit die Aufgabe zugrunde, eine Möglichkeit zur Verbesserung der Wirtschaftlichkeit bei der Herstellung von Kunststein aufzufinden bzw. bereitzustellen. Ferner bestand das Anliegen auch Eigenschaften des Produkts Kunststein nach Möglichkeit zu verbessern, beispielsweise die Biegefestigkeit. Darüber hinaus bestand das Anliegen, ein weiteres Bindemittel, nach Möglichkeit ein kostengünstigeres Bindemittel für die Kunststeinherstellung bereitzustellen.

Die Aufgabe wird erfindungsgemäß entsprechend den Merkmalen in den Patentansprüchen gelöst.

So wurde in überraschender Weise gefunden, dass man durch Einsatz einer Zusammensetzung, die neben 3-Methacryloxypropyltrimethoxysilan (nachfolgend kurz MEMO genannt) einen Anteil an dem gegenüber MEMO deutlich preisgünstigeren Vinyltrimethoxysilan (nachfolgend kurz VTMO genannt) enthält, bei der Herstellung von Kunststein Produkte mit einer guten Biegefestigkeit erhalten kann, d.h. zumindest aber sind so erhaltene Kunststeinprodukte von den Eigenschaften her solchen Produkten vergleichbar, bei deren Herstellung ausschließlich hochpreisiges MEMO eingesetzt wurde. Auch kann nach vorliegender Lehre im Wesentlichen auf einen Zusatz von zusätzlichen Löse- bzw. Verdünnungsmitteln oder Rheologiehilfen verzichtet werden.

Somit kann durch Einsatz einer vergleichsweise preisgünstigen, erfindungsgemäßen MEMO und VTMO enthaltenden Zusammensetzung die Herstellung von Kunststein deutlich wirtschaftlicher gestaltet werden und ohne die Produkteigenschaften zu verschlechtern.

Ebenfalls wurde durch den Einsatz einer erfindungsgemäßen Zusammensetzung eine verbesserte Benetzung des Füllstoffs (Quarz) und damit eine bessere Einbindung in das Kunststeinsystem festgestellt.

Weiter wurde beobachtet, dass beim Herstellungsgang durch den Einsatz einer erfindungsgemäßen Zusammensetzung der Austritt an Feuchte aus dem System verbesserte ist.

Ferner wurde überraschender Weise festgestellt, dass bei Einsatz einer erfindungsgemäßen Zusammensetzung (MEMO/VTMO) die Viskosität der bei der Herstellung von Kunststein zu mischenden und zu verpressenden Polyesterharz und SiO₂-Mehl enthaltenden Masse vergleichsweise geringer ist. Somit kann die Verdichtung und Entgasung der Kunststeinzusammensetzung vor Härtung durch den Einsatz einer MEMO/VTMO-Zusammensetzung an Stelle eines reinen MEMO-Zusatzes ebenfalls verbessert werden und darüber hinaus auch an den Verarbeitungsmaschinen ein geringeren Verschleiß auftritt, wodurch vorteilhaft eine höhere Lebens- bzw. Nutzungsdauer der Verarbeitungsmaschinen resultiert.

Darüber hinaus zeichnet sich ein Kunststeinprodukt, das unter Zusatz einer erfindungsgemäßen Zusammensetzung hergestellt wurde, durch eine hervorragende UV-Beständigkeit, einer ausgezeichneten Festigkeit, wie Biege-, Kratz- bzw. Abriebfestigkeit und Härte, aus.

Gegenstand der vorliegenden Erfindung ist daher eine Zusammensetzung umfassend Vinyltrimethoxysilan und 3-Methacryloxypropyltrimethoxysilan, wobei Vinyltrimethoxysilan und 3-Methacryloxypropyltrimethoxysilan in einem Gewichtsverhältnis von 5 zu 95 bis 95 zu 5 vorliegen.

Vorzugsweise liegen in einer erfindungsgemäßen Zusammensetzung Vinyltrimethoxysilan und 3-Methacryloxypropyltrimethoxysilan in einem Gewichtsverhältnis von 25 zu 75 bis 75 zu 25, besonders vorzugsweise in einem Gewichtsverhältnis von 30 zu 70 bis 70 zu 30, ganz besonders vorzugsweise von 40 zu 60 bis 60 zu 40, insbesondere von 45 zu 55 bis 55 zu 45 vor, so ist vorteilhaft auch ein Gewichtsverhältnis von 50 zu 50 zu nennen.

Im Allgemeinen kann man eine erfindungsgemäße Zusammensetzung durch Zusammenführen sowie Mischen der beiden Flüssigkeiten VTMO und MEMO in einem definierten Gewichtsverhältnis herstellen.

Das Breton-Verfahren als solches ist allgemein bekannt. Dabei wird in der Regel ein definiertes Gemisch aus Quarzsand und Quarzmehl, gegebenenfalls Pigmente, vorzugsweise anorganische Pigmente, beispielsweise -aber nicht ausschließlich-, Ruß, Eisenoxide, wie Rot- sowie Gelbpigment, Titandioxide, wie Weißpigment, oder organische Pigmente, wie zum Beispiel temperaturstabile Azoverbindungen, mit einem Polyesterharz als Binder, vorzugsweise ungesättigte Polyesterharze, und einem Härter, beispielsweise einem organischen Peroxid, und mindestens einem Zusatzstoff, insbesondere einem Haftvermittler, wie MEMO, sowie optional einem Beschleuniger bzw. Katalysator, beispielsweise einer organischen Kobalt- oder Kupferverbindung, gemischt, entgast und verdichtet, geeigneterweise in einer entsprechenden Formpresse, anschließend erfolgt üblicherweise eine thermische Nachbehandlung.

Somit ist ebenfalls Gegenstand der vorliegenden Erfindung die Verwendung einer erfindungsgemäßen Zusammensetzung bei der Herstellung von Kunststein, insbesondere dass man eine erfindungsgemäßen Zusammensetzung bei der Herstellung von Kunststein nach dem Breton-Verfahren einsetzt.

So setzt man vorteilhaft eine erfindungsgemäße Zusammensetzung bei der Herstellung von Kunststein in einer Menge von 0,1 bis 3 Gew.-%, bezogen auf die gesamte Masse der Kunststeinformulierung vor Härtung, ein, wobei man eine erfindungsgemäße Zusammen-setzung enthaltend Vinyltrimethoxysilan und 3-Methacryloxypropyltrimethoxysilan in einem Gewichtsverhältnis von 40 zu 60 bis 60 zu 40 besonders vorteilhaft in einer Menge von 0,1 bis 1,5 Gew.-%, insbesondere von 0,2 bis 0,6 Gew.-%, bezogen auf die gesamte Masse der Kunststeinformulierung vor Härtung, einsetzt.

Die vorliegende Erfindung wird anhand der nachfolgenden Beispiele näher erläutert, ohne den Gegenstand zu beschränken.

### Beispiele:

### Analysenmethoden:

**Biegefestigkeit** (nachfolgend auch Dreipunktbiegeprüfung genannt) als Prüfverfahren für einen künstlich hergestellten Stein EN 14617-2 (DE-Fassung aus 2008).

Die **Viskositätsbestimmungen** erfolgten mittels Kegel-Platte-Messsystem (Physica MCR 301, Anton Paar, Messsystem-Datenblatt CP25-2) bei 20 °C.

### Einsatzstoffe:

| | |
|---|---|
| Dynasylan® MEMO | 3-Methacryloxypropyltrimethoxysilan, Evonik |
| Dynasylan® VTMO | Vinyltrimethoxysilan, Evonik |
| UPE-Harz | Palatal P4-01, Aliancys NL |
| Quarzmehl | Sikron® SF3000 (Cristibalite), Quarzwerke Frechen |
| Quarzsand | HR 0,1-0,6T, Quarzwerke Frechen |
| Pigment | Bayferrox Rot 110, Harold Scholz & Co. GmbH |
| Härter | TPBP-HA-M1, United Initiators |
| Katalysator/Beschleuniger | Octa-Soligen-Cobalt 6, OMG |

### Verfahrensbeschreibung zur Herstellung der Kunststeinprüfkörper:

### Geräte:

Hobartmischer
entgasbare Metallform inkl. Ramme (Firma Georg Fischer)
2mm Metall-Analysensiebn (Firma Retsch)

### Kunstprüfkörper Grund-Rezeptur:

| | |
|---|---|
| Gewichtsverhältnis | 70:30 |
| Quarzsand : Quarzmehl | |
| Pigment | 2,0 |
| bezogen auf Harz [Gew.-%] | |
| UPE-Harz | 12,5 |
| bezogen auf eingesetzte Menge an Quarz gesamt [Gew.-%] | |
| Härter | 2,0 |
| bezogen auf Harz [Gew.-%] | |
| Silankomponente | 1,0 |
| bezogen auf Harz [Gew.-%] | |
| Beschleuniger bzw. Katalysator | 0,2 |
| bezogen auf Harz [Gew.-%] | |

### Allgemeine Vorgehensweise für die Herstellung der stabförmigen Prüfkörper:

Zunächst wurde Quarzsand abgewogen und ca. 20 g davon mit dem Pigment in einer Reibschale verrieben und mit dem restlichen Quarzsand vermischt (Quarzsand/Pigment-Vormischung). Ebenso wurde entsprechend benötigtes Quarzmehl abgewogen.

Weiter wurden Harz, Beschleuniger und Silankomponente eingewogen und gemischt, anschließend wurde die eingewogenen Mengen an Härter zugesetzt und gerührt bis die Mischung homogen war (Harz-Härter-Silan-Beschleuniger-Mischung).

Die Harz-Härter-Silan-Beschleuniger-Mischung wurde im Hobart Mischer (Rührstufe 1) mit der zwischenzeitlich vorgelegten Quarzsand/Pigment-Vormischung zusammengeführt. Nach 2 Minuten Mischen wurde das Quarzmehl dem Mischvorgang (Rührstufe 1) zugeführt. Nach weiteren rd. 4 Minuten Mischen wurde das nun vorliegende homogene Gemisch abgenommen, durch ein 2 mm Analysensieb gestrichen und nacheinander jeweils rd. 100 g in die "entgasbare" Metallform überführt. Die Verdichtung erfolgte durch 36-maliges Rammen. Daraufhin wurde das Formstück entnommen, ca. 30 Minuten bei Raumtemperatur und anschließend 1 Stunde bei 90°C getrocknet. So hergestellte stabförmige Prüfkörper wurden bis zur Messung über Nacht bei 23°C und 50% rel. Feuchte im Klimaschrank gelagert.

### Vergleichsbeispiel 1:

Die Herstellung von Vergleichsproben zur Kunststeinausprüfung erfolgte ohne Zusatz einer Silankomponente. Formulierungseinwaage: 560g Quarzsand, 240 g Quarzmehl, 2 g Pigment, 100 g UPE-Harz, 2 g Härter, 0,2 g Beschleuniger/Katalysator.

Die Prüfergebnisse bzgl. 3-Punktbiegeprüfung sind in Tabelle 1 aufgeführt.

### Vergleichsbeispiel 2:

Die Herstellung von Vergleichsproben zur Kunststeinausprüfung erfolgte gemäß der vorangehenden allgemeinen Verfahrensbeschreibung zur Herstellung der Kunststeinprüfkörper unter Zusatz von Dynasylan® MEMO als Silankomponente (1 Gew.-% bezogen auf die eingesetzte Menge an UPE-Harz).

Die Prüfergebnisse bzgl. 3-Punktbiegeprüfung sind in Tabelle 1 aufgeführt.

### Vergleichsbeispiel 3:

Die Herstellung von Vergleichsproben zur Kunststeinausprüfung erfolgte gemäß der vorangehenden allgemeinen Verfahrensbeschreibung zur Herstellung der Kunststeinprüfkörper unter Zusatz von Dynasylan® VTMO als Silankomponente (1 Gew.-% bezogen auf die eingesetzte Menge an UPE-Harz).

Die Prüfergebnisse bzgl. 3-Punktbiegeprüfung sind in Tabelle 1 aufgeführt.

### Beispiel 1:

Die Herstellung erfindungsgemäßer Proben zur Kunststeinausprüfung erfolgte gemäß der vorangehenden allgemeinen Verfahrensbeschreibung zur Herstellung der Kunststeinprüfkörper unter Zusatz einer MEMO/VTMO-Zusammensetzung von 0,75 Gew.-% Dynasylan® MEMO und 0,25 Gew.-% Dynasylan® VTMO, bezogen auf die eingesetzte Menge an UPE-Harz.

Die Prüfergebnisse bzgl. 3-Punktbiegeprüfung sind in Tabelle 1 aufgeführt.

### Beispiel 2:

Die Herstellung erfindungsgemäßer Proben zur Kunststeinausprüfung erfolgte gemäß der vorangehenden allgemeinen Verfahrensbeschreibung zur Herstellung der Kunststeinprüfkörper unter Zusatz einer MEMO/VTMO-Zusammensetzung von 0,5 Gew.-% Dynasylan® MEMO und 0,5 Gew.-% Dynasylan® VTMO, bezogen auf die eingesetzte Menge an UPE-Harz.

Die Prüfergebnisse bzgl. 3-Punktbiegeprüfung sind in Tabelle 1 aufgeführt.

### Beispiel 3:

Die Herstellung erfindungsgemäßer Proben zur Kunststeinausprüfung erfolgte gemäß der vorangehenden allgemeinen Verfahrensbeschreibung zur Herstellung der Kunststeinprüfkörper unter Zusatz einer MEMO/VTMO-Zusammensetzung von 0,3 Gew.-% Dynasylan® MEMO und 0,7 Gew.-% Dynasylan® VTMO, bezogen auf die eingesetzte Menge an UPE-Harz.

Die Prüfergebnisse bzgl. 3-Punktbiegeprüfung sind in Tabelle 1 aufgeführt.

**Tabelle 1: Vergleichende 3-Punktbiegeprüfung von Kunststeinprobekörper mit MEMO, VTMO und MEMO/VTMO-Mischungen als Binder [1h bei 90°C getrocknet]**

| Zusammensetzung der eingesetzten Silankomponente in Gew.-% | relative Biegefestigkeit in % sowie rel. Standardabweichung | Versuchsnummer |
|---|---|---|
| MEMO 100 Gew.-% | 97±3 | Vergleichsbeispiel 2 |
| VTMO 100 Gew.-% | 73±7 | Vergleichsbeispiel 3 |
| MEMO 75 Gew.-% + VTMO 25 Gew.-% | 93±5 | Beispiel 1 |
| MEMO 50 Gew.-%+ VTMO 50 Gew.-% | 90±7 | Beispiel 2 |
| MEMO 30 Gew.-%+ VTMO 70 Gew.-% | 85±7 | Beispiel 3 |

### Beispiel 4:

Durch Mischen der entsprechenden Komponenten wurden mehrere Quarzmehl-/UPE-Dispersionen mit einem Anteil an Quarzmehl von jeweils 50 Gew.-% hergestellt. Dabei wurde einmal unsilanisiertes Quarzmehl verwendet sowie für Versuch A Quarzmehl, das mit 0,6 Gew.-% MEMO, bezogen auf die Menge an Quarzmehl, und für Versuch B Quarzmehl, das mit 0,6 Gew.-% einer 1:1 Mischung MEMO/VTMO, bezogen auf die Menge an Quarzmehl, zuvor behandelt wurde. Die Viskosität der zuvor genannten Dispersionen wurde bestimmt. Die Prüfergebnisse sind in Tabelle 2 aufgeführt.

**Tabelle 2: Rheologieverhalten einer UPE-Dispersionen aus Beispiel 4:**

| Scherrate [1/s] | Quarzmehl unsilanisiert Viskosität [Pas] | Versuch-Nr. Quarzmehl mit 0,6% MEMO Viskosität [Pas] | Versuch-Nr. Quarzmehl mit 0,6% MEMO/VTMO Viskosität [Pas] |
|---|---|---|---|
| 0,01 | 125 | 11,2 | 8,4 |
| 0,0398 | 101 | 13,3 | 11,0 |
| 0,1 | 61,7 | 14,3 | 11,9 |
| 0,159 | 47,0 | 14,4 | 12,1 |
| 0,2 | 48,0 | 15,0 | 13,0 |
| 0,251 | 37,2 | 14,5 | 12,4 |
| 0,4 | 29,9 | 14,4 | 12,4 |
| 0,6 | 30,0 | 15,0 | 13,0 |
| 0,631 | 24,5 | 14,3 | 12,4 |
| 0,8 | 25,0 | 15,0 | 13,0 |
| 2 | 20,0 | 14,0 | 12,0 |
| 2,51 | 15,9 | 12,3 | 11,5 |

## Patentansprüche

1. Zusammensetzung umfassend Vinyltrimethoxysilan und 3-Methacryloxypropyltrimethoxysilan, wobei Vinyltrimethoxysilan und 3-Methacryloxypropyltrimethoxysilan in einem Gewichtsverhältnis von 5 zu 95 bis 95 zu 5 vorliegen.

2. Zusammensetzung nach Anspruch 1, **dadurch gekennzeichnet,**
**dass** Vinyltrimethoxysilan und 3-Methacryloxypropyltrimethoxysilan in einem Gewichtsverhältnis von 25 zu 75 bis 75 zu 25 vorliegen.

3. Zusammensetzung nach Anspruch 2, **dadurch gekennzeichnet,**
**dass** Vinyltrimethoxysilan und 3-Methacryloxypropyltrimethoxysilan in einem Gewichtsverhältnis von 30 zu 70 bis 70 zu 30 vorliegen.

4. Zusammensetzung nach Anspruch 3, **dadurch gekennzeichnet,**
**dass** Vinyltrimethoxysilan und 3-Methacryloxypropyltrimethoxysilan in einem Gewichtsverhältnis von 40 zu 60 bis 60 zu 40 vorliegen.

5. Zusammensetzung nach Anspruch 4, **dadurch gekennzeichnet,**
**dass** Vinyltrimethoxysilan und 3-Methacryloxypropyltrimethoxysilan in einem Gewichtsverhältnis von 45 zu 55 bis 55 zu 45 vorliegen.

6. Zusammensetzung nach Anspruch 5, **dadurch gekennzeichnet,**
**dass** Vinyltrimethoxysilan und 3-Methacryloxypropyltrimethoxysilan in einem Gewichtsverhältnis von 50 zu 50 vorliegen.

7. Verwendung einer Zusammensetzung nach einem der Ansprüche 1 bis 6 bei der Herstellung von Kunststein.

8. Verwendung einer Zusammensetzung nach Anspruch 7, wobei man eine Zusammensetzung nach einem der Ansprüche 1 bis 6 bei der Herstellung von Kunststein nach dem Breton-Verfahren einsetzt.

9. Verwendung einer Zusammensetzung nach Anspruch 7 oder 8, wobei man die Zusammensetzung in einer Menge von 0,1 bis 3 Gew.-%, bezogen auf die gesamte Masse der Kunststeinformulierung vor Härtung, einsetzt.

10. Verwendung einer Zusammensetzung nach Anspruch 9, wobei man die Zusammensetzung enthaltend Vinyltrimethoxysilan und 3-Methacryloxypropyltrimethoxysilan in einem Gewichtsverhältnis von 40 zu 60 bis 60 zu 40 in einer Menge von 0,1 bis 1,5 Gew.-%, insbesondere 0,2 bis 0,6 Gew.-%, bezogen auf die gesamte Masse der Kunststeinformulierung vor Härtung, einsetzt.
